# EUROPEAN PATENT APPLICATION

(11) **EP 0 850 561 A1**
(43) Date of publication of application: **01.07.1998**
(21) Application number: 97203879.8
(22) Date of filing: 10.12.1997
(51) Int. Cl.: A01K 1/01, A01C 3/00

(54) **Animal-shed system provided with a primary separating device and lowemission processing of the separated fractions**

(30) Priority: 23.12.1996 NL 1004887
(71) Applicant: Instituut voor Milieu- en Agritechniek (IMAG-DLO), 6700 AA Wageningen (NL)
(72) Inventor: Kroodsma, Willem, 3911 MP Rhenen (NL)
(74) Representative: de Bruijn, Leendert C.

(57) **Abstract**

The invention relates to an integrated animal-shed system in which a primary separation is carried out of solid manure and liquid manure in the collecting space (10) underneath the floor grating (θ) of the animal shed (2). The liquid manure is collected in acidified liquid manure so that emission of NH₃ and odour is reduced. The acidified liquid manure is stored in a storage reservoir (23) whose content is fed to an evaporator (25) in order to form a concentrate. The predried solid manure is preferably removed to a storage container (22) via a drying conveyor (7). Composting is promoted by feeding the animal-shed air to the storage container for solid manure and removing said air to the evaporator. In the evaporator according to the invention, said air is scrubbed and NH₃ and dust are removed from it by mixing the air removed from the animal shed with the acidified liquid manure. The animal-shed system according to the present invention forms composted manure having a high concentration of manure substances and a low moisture content, with the result that the manure can readily be conveyed and can be used at the appropriate location.

## Description

The present invention relates to an animal-shed system, comprising an animal shed provided with a floor grating, a manure-collecting space situated under the floor grating, a conveyor element which bridges the collecting space and allows liquid through, and a removal channel situated along the bottom side of the collecting space for removing liquid manure allowed through by the conveyor element.

In cattle and pig farming, it is known to place underneath the grating elements of an animal-shed floor a filter cloth or a perforated conveyor belt to separate solid manure and liquid manure. The solid manure and the liquid manure fall through the gratings of the animal-shed floor, after which the liquid manure enters a removal channel via the penetrable conveyor element. "Penetrable" is understood herein as meaning a conveyor element which is of convex or sloping design and allows liquid into the collecting space via its edges, and also conveyor elements which are open or perforated over part of their surface, such as filter cloths, gratings and the like. The solid manure is periodically brought by the conveyor element to a conveyor belt which is situated along the stalls in the animal shed and which feeds the manure to a storage silo. Such a system is described in greater detail in "Mestscheiding" ("Manure separation") by W. Kroodsma and H. R. Poelma, Publication 209, Instituut voor Mechanisatie Arbeid en Gebouwen, Wageningen, 1985. As a result of separating the manure into a liquid-manure fraction and a solid fraction, it can be utilized better. Thus, for example, the liquid manure is driven out onto the soil surface near the animal shed, while the solid fraction, whose fertilization quality is the highest, can be conveyed to other locations.

One object of the present invention is to provide an animal shed in which manure processing techniques can be used at farm level as a result of primary separation of the liquid manure and the solid manure in an integrated system. Another object of the present invention is to reduce the emission of ammonia, dust and odour at the same time. It is a further object of the present invention to supply manure which can be marketed and conveyed in a commercial way in view of its composition.

For this purpose, the animal shed according to the present invention is characterized in that the liquid-manure removal channel is connected to a storage reservoir provided with acidification means for adding an acid to the liquid manure in the storage reservoir, which storage reservoir is connected via a liquid-manure feed channel to the collecting space for feeding acidified liquid manure to the collecting space. Since the liquid manure is collected in acidified liquid manure, the ammonia emission from the "fresh" liquid manure collected in the acidified liquid manure can be appreciably reduced. The acidified liquid manure is formed by feeding an acid, such as, for example, sulphuric acid, to the storage reservoir.

It is, however, also possible to use other organic and inorganic acids in addition to sulphuric acid, microbial acidification also being possible.

In a preferred embodiment of an animal-shed system according to the present invention, an air removal channel in the animal shed is connected to an air inlet of an evaporator, the liquid-manure storage reservoir also being connected to the evaporator for feeding the acidified liquid manure thereto, the animal-shed air in the evaporator being mixed with the acidified liquid manure which is then reduced by evaporation to form a concentrate.

As a result of mixing the acidified liquid manure with the animal-shed air in an evaporator, ammonia present in the animal-shed air is combined with the acidified liquid manure. As a result of circulating the acidified liquid manure through the evaporator, a concentrate is formed and the ventilating air from the animal shed is discharged into the outside air in virtually completely saturated and ammonia-free form. The dust emission of the animal-shed air will also be reduced after such a scrubbing step.

In a further embodiment of an animal shed according to the invention, the liquid-penetrable conveyor element debouches into a drying conveyor which terminates in a solid-manure storage container, drying means being incorporated for feeding dry air to the drying conveyor and/or the conveyor element in order to force-dry the manure.

The solid manure which has collected on the conveyor element can be periodically or continuously removed from the animal shed via the drying conveyor. In this connection, the drying conveyor is preferably situated inside a closed, central air removal channel. During the conveyance over the drying conveyor, which is, for example, equally as long as the animal shed or somewhat longer and which may comprise a number of conveyor belts situated one above the other, animal-shed air is drawn off over the manure by the air removal channel for the purpose of forced drying. In this connection, an additional length of the drying conveyor with respect to the length of the animal shed will provide additional drying capacity. If the manure is predried on the penetrable conveyor element in the collecting space, hot, dry air, such as, for example, animal-shed air, can be blown onto the manure therein via perforated pipes. For good composting, it is important that the manure is predried to at least 40% dry matter. The dried solid manure preferably contains 90% of the dry matter and rather more than 90% of the phosphate and almost 60% of the nitrogen which is excreted by the cattle. Since the thin manure fraction is separated from the solid-manure fraction, straw can be supplied to the animal sheds, some of which is eaten by the animals and some of which reaches the conveyor element via the gratings and is then fed to the storage container with the solid manure. The fibrous material of the straw can promote composting in the storage container. A suitable storage container is described in European Patent Application No. EP-A-0 589 537 in the name of the Applicant.

Preferably, an air outlet of the solid-manure storage container is connected to the air inlet of the evaporator. As a result of removing a portion of the animal-shed ventilating air, for example, via the solid-manure storage container, the gases and water vapour liberated during the spontaneous composting are removed to the evaporator. Preferably, the concentrate formed in the evaporator is fed to the solid-manure storage container.

As a result of feeding the liquid manure collected in the removal channel underneath the floor grating to a settling tank before conveying the liquid manure to the storage reservoir, suspended solid particles in the liquid manure can be separated off and fed to the solid-manure storage container. The integrated animal-shed system according to the present invention converts the animal-shed manure into composted manure and the liquid manure is converted into concentrated liquid. It is possible to mix the concentrated liquid or part thereof with the solid fraction. As a result, it becomes possible to convey the composted manure over greater distances. In view of the high proportion of minerals in this composted fraction, the pressure of over-fertilization on the farmlands surrounding the animal-shed system can consequently be reduced. It likewise becomes possible to obtain, after adding certain procducts, a compost product having a composition for other applications in fertilization, such as, for example, potting soil. Furthermore, the integrated animal-shed system according to the invention minimizes both the emission of ammonia into the environment and also odour and dust particles.

An exemplary embodiment of an animal-shed system according to the present invention will be explained in greater detail below by reference to the accompanying drawing. In the drawing:
Figure 1 shows a diagrammatical plan view of an animal-shed system according to the present invention,
Figure 2 shows a cross-sectional view of a stall in the animal shed according to Figure 1 along the line II-II,
Figure 3 shows a cross-sectional view of a collecting space situated underneath the animal-shed floor along the line III-III in Figure 2,
Figure 4 shows an alternative embodiment of a collecting space situated underneath the animal-shed floor and a conveyor element,
Figure 5 diagrammatically shows an animal-shed system according to the present invention and
Figure 6 shows a side view of the solid-manure storage container and also the evaporator according to the present invention.

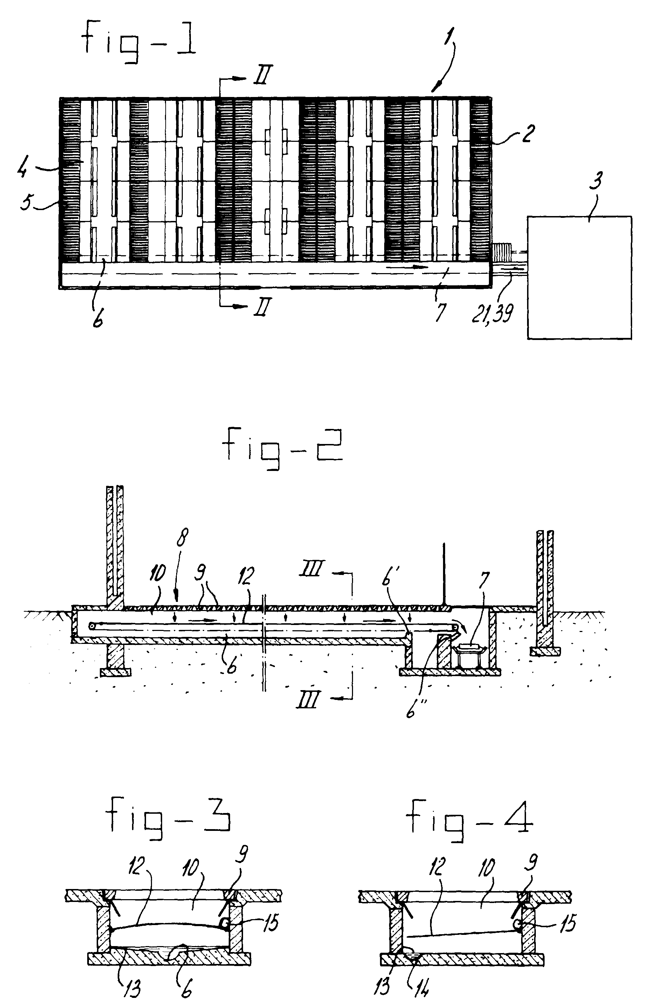

Figure 1 shows an animal-shed system 1 comprising a sty 2 for fattening pigs and a manure-processing device 3. In the animal shed, or sty 2, the pigs are housed in stalls, the floor of which is formed by a sloping, closed floor 4 and concrete grating elements 5. The manure from the animals kept in the stalls falls through the gratings 5 into a collecting space situated underneath the grating elements. In this process, the solid manure is collected on a liquid-penetrable conveyor element 12, as shown in Figure 2. In the embodiment shown, said conveyor element 12 is formed by a closed, bulging or sloping belt along which the liquid manure can flow away via the side edges. The conveyor element 12 may also be formed by a perforated belt or by a filter cloth. The liquid manure is conveyed out of the animal shed via a liquid-manure removal channel 6 to the manure-processing unit 3, which will be described in greater detail below. The solid manure which is collected on the conveyor device 12 under the grating elements is fed to a drying conveyor 7 and then removed along the stalls to the manure-processing unit 3.

As is evident from Figure 2, the collecting space 10 for liquid manure and for solid manure is situated underneath the animal-shed floor 8. The grating elements 9 are provided with slots so that the solid manure and the liquid manure can pass through them into the collecting space 10. The grating elements 9 may be formed from concrete, metal, plastic and the like. In this process, the solid manure falls onto the conveyor element 12 and the liquid manure will be collected via the conveyor element 12 in a gutter of the liquid-manure removal channel 6. Situated at the end of that part of the liquid-manure removal channel 6 which is situated underneath the grating elements 9 is a weir 6' so that a layer of acidified liquid manure 13 remains in the channel 6.

The manure is removed either continuously or at predetermined intervals via the conveyor element 12 to the drying conveyor 7. The solid manure is removed from the conveyor element 12 by a fixed scraper 6'' and it falls onto the drying conveyor 7.

The drying conveyor 7 may be made up of a number of conveyor belts disposed one above the other, the manure from the stalls in the animal shed being fed onto various levels of the conveyor belt 7 for an efficient drying, or the length can be varied until a desired drying capacity is reached. During conveyance through the animal shed 2, the manure on the conveyor belt 7 is predried to a percentage of from approximately 25% dry matter to approximately 40% dry matter. The applied drying temperature of the dry air is approximately 20°C at a flow rate of 40 to 50 m³ per animal per hour. For this purpose, an air extraction device can be connected to the air removal channel in which the conveyor belt 7 is sited in order to extract ambient air over or through the manure on the belt 7. A crumbler, a spreader or a shaker for promoting the drying may optionally be incorporated along the conveyor belt 7.

Liquid manure 13 which has been acidified with, for example, sulphuric acid to a pH of less than 6 is fed from the manure-processing device 3 to the liquid-manure collection channel 6. As a result, the fresh liquid manure enters an acidic environment in the liquid-manure collection channel 6, thereby limiting the discharge of NH₃. The fresh liquid manure collected in the acidified liquid manure is removed via the removal channel 6 to the manure-processing unit 3, after which said liquid manure is further mixed with an acid and this new acidified liquid manure is partly fed back to the collecting spaces 10 underneath the stalls in the animal shed 2.

Figure 3 shows an embodiment in which the conveyor element 12 is formed by a bulging belt, it being possible for the liquid manure to enter the collection channel 6 via the side edges. The collection channel 6 in the collecting space 10 can be provided with sloping walls having a central gutter in a concrete floor in which there is a layer of acidified liquid manure 13.

As shown in Figure 4, the conveyor element 12 can also be designed as a sloping conveyor belt whose surface is not penetrable per se. In this case, the manure remains on the conveyor belt and the liquid manure is removed via a side edge to a gutter 14 in which there is acidified liquid manure 13. Perforated drying pipes 15 which blow dry air over the manure on the conveyor elements are sited along the conveyor elements 12 in Figures 3 and 4.

It is also possible to design the liquid-manure collection channel 6 as a closed sewer system made, for example, of plastic pipes instead of as an open gutter.

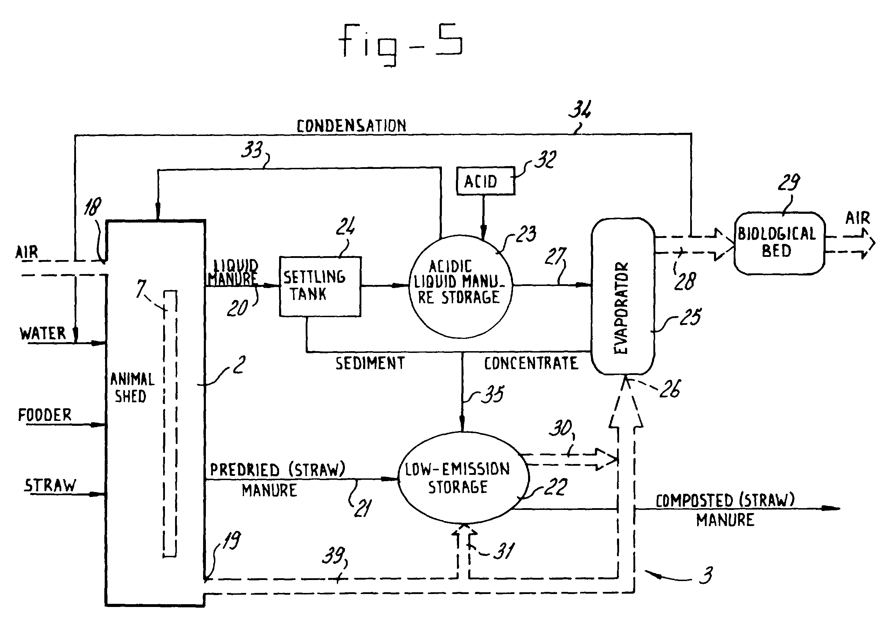

Figure 5 shows a diagram of the animal shed 2 and the manure-processing unit 3. Air, water, fodder and straw are supplied to the animal shed 2. Ventilating air is supplied to the animal shed via an air inlet 18 and passed over the drying conveyor 7. The manure, which is predried to at least 40% dry matter on the drying conveyor 7 and which may be mixed with straw, is fed via a manure removal channel 21 to a low-emission solid-manure storage container 22. The ventilating air in the animal shed is drawn off into a central channel 39 in which the drying conveyor 7 is installed. Preferably, the manure removal channel 21 is situated inside the air removal channel 39 for an efficient drying.

Via a liquid-manure removal channel 20, the liquid manure is removed from the animal shed 2 into a storage reservoir 23 via settling tank 24. An acid, such as, for example, sulphuric acid, is fed from a container 32 to the storage reservoir 23 until the pH of the acidified liquid manure in the storage reservoir is approximately 6. Some of the acidified liquid manure is fed back via a liquid-manure return channel 33 to the animal shed 2 and is passed into the collecting space 10 under the stalls in the animal shed 2 for collecting fresh liquid manure. As a result of collecting the latter in acidified liquid manure no ammonia is volatilized.

The acidified liquid manure is also fed via a feed line 27 from the storage reservoir 23 into an evaporator 25. Via an air outlet 19, air is fed from the animal shed 2 to an air feed 26 of the evaporator 25. In the evaporator 25, the acidic liquid manure is formed into a concentrate which is transferred via the feed line 35 to the solid-manure storage container. The sediment from the settling tank 24 is also fed via the feed line 35 to the solid-manure storage container 22. The ventilating air from the animal shed is partly fed to the storage container 22 for the purpose of composting. The gases and water vapour formed during composting are removed by the animal-shed air to the evaporator 25 via the air outlet 30 of the container 22. The air stream originating from the evaporator 25 can be fed via an outlet to a biological bed 29 to remove odorous components. Water vapour condensed in the evaporator can be re-used again and is fed to the animal shed 2 via pipe 34. With the aid of the manure-processing system 3 according to Figure 5, the manure streams originating from the animal shed 2 are converted into composted manure or straw manure and purified air, and also purified water.

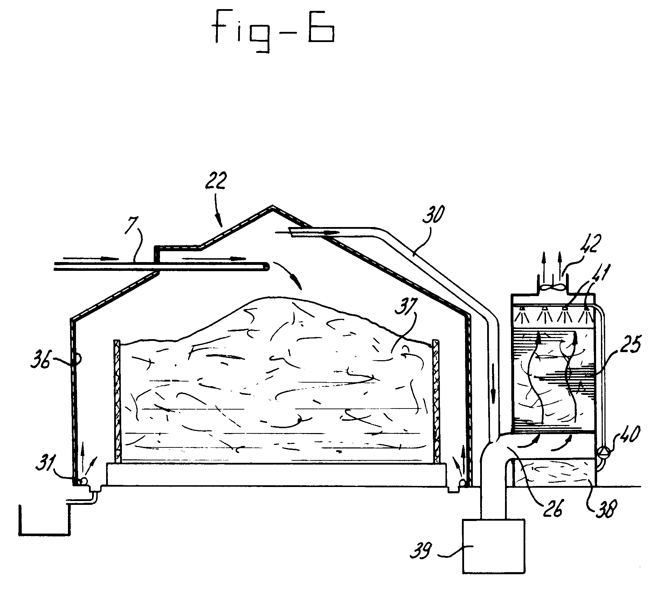

Figure 6 shows diagrammatically the solid-manure storage container 22 and the evaporator 25. The solid manure is fed via the drying conveyor 7 to an enclosed store in which an airtight seal is formed by a plastic lining 36. The gases liberated during composting of the manure 37 are fed via the air outlet 30 to the air inlet 26 of the evaporator 25. Together with the air originating from the central air outlet 39, the air from the container 22 is passed over the acidified liquid manure 38 into the evaporator 25. The acidified liquid manure 38 is fed via a pump 40 and a number of spraying heads 41 in countercurrent through the air stream which is directed upwards and which is discharged into the outside air via an extraction ventilator 42. With the aid of the integrated animal-shed system according to the present invention:
- a higher separation efficiency of the solid manure and the liquid manure is coupled to a low energy consumption,
- a considerable part of the minerals in the solid manure fraction is concentrated,
- the amount of manure to be disposed of is reduced by about 80% as a result of evaporating liquid manure with the aid of the water-absorption capacity of unsaturated ventilating air heated by the body heat of the animals and possibly by the heat liberated during composting,
- the manure is converted into composted manure whose composition complies with the requirements of the user and the requirements imposed for export to a greater extent,
- the well-being of the animals can be improved by adding straw to the animal sheds,
- the emission of ammonia and odour from the animal shed is reduced by collecting the liquid manure in acidified liquid manure and periodically removing the manure,
- the stall conditions are improved by regular removal of manure,
- the emission of ammonia, odour and dust is substantially reduced by scrubbing the ventilating air in the evaporator, and
- the water vapour liberated can be re-used.

Although the present invention has been described by reference to a fattening pigsty, the integrated animal-shed system according to the present invention also finds application, for example, in the case of animal sheds for breeding pigs, cattle sheds and the like.

## Claims

1. Animal-shed system, comprising an animal shed (2) provided with a floor grating (8), a manure-collecting space (10) situated under the floor grating, a conveyor element (12) which bridges the collecting space and allows liquid through, and a removal channel (6) situated along the bottom side of the collecting space for removing liquid manure allowed through by the conveyor element, characterized in that the liquid-manure removal channel (6) is connected to a storage reservoir (23) provided with acidification means (32) for adding an acid to the liquid manure in the storage reservoir (23), which storage reservoir is connected via a liquid-manure feed channel (33) to the collecting space (10) for feeding acidified liquid manure to the collecting space.

2. System according to Claim 1, characterized in that an air removal channel (39) in the animal shed (2) is connected to an air inlet (26) of an evaporator (25), the liquid-manure storage reservoir (23) also being connected to the evaporator (25) for feeding the acidified liquid manure thereto, the animal-shed air in the evaporator being mixed with the acidified liquid manure which is then reduced by evaporation to form a concentrate.

3. Animal-shed system according to Claim 1 or 2, characterized in that the liquid-penetrable conveyor element (12) debouches into a drying conveyor (7) which debouches into a solid-manure storage container (22), drying means being incorporated for feeding dry air to the drying conveyor (7) and/or to the conveyor element (12) in order to force-dry the manure.

4. Animal-shed system according to Claim 3, characterized in that the drying conveyor is situated in the animal shed (2) inside an air removal channel (39) of the animal shed.

5. Animal-shed system according to Claim 3, characterized in that the drying means comprise a perforated pipe which is situated along the conveyor element for supplying dry air to the conveyor element.

6. Animal-shed system according to one of the preceding claims, characterized in that manure processing devices, such as a spreading device, a crumbler or a turning device, are incorporated along the drying conveyor.

7. Animal-shed system according to Claims 2 and 3, characterized in that an air inlet (31) of the solid-manure storage container (22) is connected to an air removal channel (39) of the animal shed and in that an air outlet (30) of the solid-manure storage container (22) is connected to the air inlet (26) of the evaporator (25).

8. Animal-shed system according to Claim 3, 4, 5, 6 or 7, characterized in that a removal channel (35) of the evaporator (25) is connected to a feed opening of the solid-manure storage container (22) for feeding concentrate formed in the evaporator to the storage container (22).

9. Animal-shed system according to Claim 3, 4, 5, 6, 7 or 8, characterized in that a settling tank (24) is incorporated upstream of the storage reservoir (23) for the purpose of separating a sediment fraction from the liquid manure, the settling tank (24) being connected by means of an outlet to the solid-manure storage container (22) for the purpose of feeding sediment thereto.
